# EUROPÄISCHE PATENTSCHRIFT

(11) **EP 1 022 167 B1**
(45) Veröffentlichungstag und Bekanntmachung des Hinweises auf die Patenterteilung: **26.11.2008**
(21) Anmeldenummer: 00100538.8
(22) Anmeldetag: 12.01.2000
(51) Int. Cl.: B60G 17/015, B60G 17/052

(54) **Niveauregelsystem für ein Kraftfahrzeug**
Height control system for a motor vehicle
Système de régulation du niveau pour un véhicule automobile

(30) Priorität: 20.01.1999 DE 19902049
(43) Veröffentlichungstag der Anmeldung: 26.07.2000
(73) Patentinhaber: Continental Aktiengesellschaft, 30165 Hannover (DE)
(72) Erfinder: Heilenkötter, Carsten, 28844 Weyhe (DE); Matthies, Thomas, 30419 Hannover (DE); Sommer, Stefan, Dr., 30916 Isernhagen (DE)

(56) Entgegenhaltungen:
- EP-A- 0 397 181
- DE-A- 3 825 280
- DE-A- 4 136 338

## Beschreibung

Die Erfindung betrifft ein Niveauregelsystem für ein Kraftfahrzeug, das folgende Bestandteile enthält:
- Luftfedern, wobei jeder Luftfeder jeweils ein schaltbares Ventil zum Auffüllen oder Abregeln der entsprechenden Luftfeder zugeordnet ist,
- ein weiteres schaltbares Ventil, über das jede Luftfeder zum Abregeln mit der Atmosphäre verbindbar ist,
- eine erste Steuereinheit, die die schaltbaren Ventile zum Auffüllen oder Abregeln der Luftfeder steuert.

Ein solches gattungsgemäßes Niveauregelsystem ist aus der EP 0 397 181 A bekannt.

In jüngster Vergangenheit werden moderne Kraftfahrzeuge häufig mit derartigen Niveauregelsystemen ausgestattet. Diese bieten den Vorteil, daß der Abstand des Fahrzeugaufbaus gegenüber einem festen Bezugspunkt unabhängig vom Beladungszustand des Kraftfahrzeuges konstant gehalten werden kann. Es ist jedoch festzustellen, daß moderne Niveauregelsysteme auch mit einem Sicherheitsrisiko behaftet sind. So kann beispielsweise der Fall auftreten, daß ein mit einem Niveauregelsystem ausgestattetes Kraftfahrzeug stark beladen wird. In diesem Fall muß der Luftdruck in den Luftfedern durch Auffüllen dieser gesteigert werden, um den Abstand des Fahrzeugaufbaus gegenüber dem Bezugspunkt konstant zu halten. Dementsprechend muß nach einer Entladung des Kraftfahrzeuges der Luftdruck in den Luftfedern durch Abregeln wiederum verringert werden. Das Auffüllen und Abregeln der Luftfedern wird von der oben genannten ersten Steuereinheit gesteuert, indem diese die schaltbaren Ventile in einen entsprechenden Schaltzustand überführt. Tritt während des beladenen Zustandes des Kraftfahrzeuges ein Fehler in der ersten Steuereinheit auf, der dazu führt, daß eine Abregelung der Luftfedern nicht mehr möglich ist, so kann nach dem Entladen des Kraftfahrzeuges der Luftdruck in den Luftfedern nicht mehr reduziert werden. Dies hat zur Folge, daß nach dem Entladen der Fahrzeugaufbau gegenüber dem Bezugspunkt angehoben wird. Dies kann dazu führen, daß der Schwerpunkt des Kraftfahrzeuges nach dem Entladen sehr hoch liegt, so daß sich das Kraftfahrzeug dann in einem fahrdynamisch unsicheren Zustand befindet.

Ein weiteres Sicherheitsrisiko kann sich bei mit Niveauregelsystemen ausgestatteten Geländefahrzeugen einstellen. So kann zur Schaffung einer größen Bodenfreiheit eines Geländefahrzeuges der Schwerpunkt des Fahrzeuges mit Hilfe des Niveauregelsystems auf ein sehr hohes Niveau gebracht werden. Dies geschieht durch Auffüllen der Luftfedern mit Druckluft. Wird die große Bodenfreiheit des Geländefahrzeuges nicht mehr benötigt, so müssen die Luftfedern abgeregelt werden. Sowohl der Auffüllvorgang als auch die Abregelung wird von der oben genannten ersten Steuereinheit gesteuert, die die schaltbaren Ventile in einen entsprechenden Schaltzustand überführt. Weist das Geländefahrzeug eine große Bodenfreiheit auf und kommt es in diesem Zustand in der ersten Steuereinheit zu einem Fehler, der dazu führt, daß eine Abregelung der Luftfedern nicht mehr möglich ist, so ist eine Absenkung des Fahrzeugaufbaus des Geländewagens nicht mehr möglich. Der Geländewagen befindet sich also aufgrund des hohen Schwerpunktes in einem fahrdynamisch unsicheren Zustand.

Die DE 3 825 280 A und DE 4 136 338 A zeigen Sicherheitssysteme die mit 2 Steuereinheiten arbeiten, wobei beide Einheiten Sensordaten verarbeiten und die Rechenergebnisse vergleichen.

Der Erfindung liegt die Aufgabe zugrunde, ein Niveauregelsystem zu schaffen, das die Sicherheit des Kraftfahrzeuges auch dann gewährleistet, wenn die erste Steuereinheit fehlerhaft arbeitet bzw. ausfällt.

Ausgehend von einem Niveauregelsystem der eingangs genannten Art wird die Aufgabe gemäß den kennzeichnenden Merkmalen des Anspruchs 1 dadurch gelöst, daß
- das Niveauregelsystem eine zweite Steuereinheit enthält und daß
- die erste Steuereinheit in zeitlichen Abständen ein Signal an die zweite Steuereinheit übermittelt und daß
- die zweite Steuereinheit eine Prüfvorrichtung enthält, in der überprüft wird, ob die zweite Steuereinheit jedes von der ersten Steuereinheit erwartete Signal empfängt und daß dann, wenn die zweite Steuereinheit ein von der ersten Steuereinheit erwartetes Signal nicht empfängt, die zweite Steuereinheit die Steuerung der schaltbaren Ventile derart übernimmt, daß durch eine Ansteuerung der schaltbaren Ventile durch die zweite Steuereinheit das Kraftfahrzeug in einen fahrdynamisch sicheren Zustand überführt wird.

Bei den zeitlichen Abständen, in denen die erste Steuereinheit ein Signal an die zweite Steuereinheit übermittelt, kann es sich beispielsweise um regelmäßige zeitliche Abstände handeln. Alternativ ist es auch möglich, daß in der zweiten Steuereinheit Zeitintervalle definiert werden und daß die zweite Steuereinheit mit Hilfe der Prüfvorrichtung überprüft, ob in jedem Zeitintervall von der ersten Steuereinheit ein Signal an die zweite Steuereinheit übermittelt wird.

Der Grundgedanke der Erfindung ist darin zu sehen, daß der ersten Steuereinheit des Niveauregelsystems eine zweite Steuereinheit zugeordnet wird, die bei Ausfall eines erwarteten Signals von der ersten Steuereinheit auf einen Fehler in dieser schließt und dann die Steuerung der schaltbaren Ventile des Niveauregelsystems derart übernimmt, daß das Kraftfahrzeug jederzeit in einen fahrdynamisch sicheren Zustand überführbar ist.

Die mit der Erfindung erzielten Vorteile sind insbesondere darin zu sehen, daß die Sicherheit des Kraftfahrzeuges auch bei einem Ausfall der ersten Steuereinheit gewährleistet ist, da in diesem Fall von der ersten Steuereinheit keine Signale an die zweite Steuereinheit übermittelt werden, und diese dann die Steuerung der schaltbaren Ventile übernimmt. Ein weiterer Vorteil der Erfindung ist darin zu sehen, daß die zusätzlich entstehenden Kosten trotz des Sicherheitsgewinns im Niveauregelsystem gering sind, da lediglich eine zweite Steuereinheit zur Verfügung gestellt wird, die lediglich eine einfache Regelfunktion übernimmt (nämlich die Überführung des Kraftfahrzeuges in einen fahrdynamisch sicheren Zustand).

Gemäß einem ersten Ausführungsbeispiel der Erfindung nach Anspruch 2 öffnet die zweite Steuereinheit dann, wenn sie ein von der ersten Steuereinheit erwartetes Signal nicht empfängt, die schaltbaren Ventile, so daß jede Luftfeder des Niveauregelsystems mit der Atmosphäre verbunden ist. Bei diesem Ausführungsbeispiel ist es möglich, daß die schaltbaren Ventile des Niveauregelsystems von der zweiten Steuereinheit nicht noch einmal angesteuert werden und geöffnet bleiben. In diesem Fall sinkt der Luftdruck in den Luftfedern bis auf Atmosphärendruck. Die Luftfedern können den Fahrzeugaufbau unabhängig vom Beladungszustand dann nicht mehr tragen, so daß der Fahrzeugaufbau auf die Puffer der Stoßdämpfer aufsetzt und somit den niedrigst möglichen Schwerpunkt einnimmt. Das Kraftfahrzeug befindet sich aufgrund dieses niedrigst möglichen Schwerpunktes des Fahrzeugaufbaus in einem fahrdynamisch sicheren Zustand. Der Vorteil des ersten Ausführungsbeispiels der Erfindung ist darin zu sehen, daß die zweite Steuereinheit sehr einfach ausgebildet sein kann, da sie die schaltbaren Ventile lediglich einmal zur Öffnung anzusteuern braucht und die Ventile danach im geöffneten Zustand verbleiben. Ein weiterer Vorteil des Ausführungsbeispiels ist darin zu sehen, daß das Niveauregelsystem zur Regelung keine Höhensensoren benötigt und somit preiswert ist.

Gemäß einer Weiterbildung des ersten Ausführungsbeispiels nach Anspruch 3 erhält die zweite Steuereinheit durch Öffnung der schaltbaren Ventile den Zustand, in dem jede Luftfeder des Niveauregelsystems mit der Atmosphäre verbunden ist, über einen vorgegebenen Zeitraum aufrecht und nach Ablauf des vorgegebenen Zeitraums schließt die zweite Steuereinheit die schaltbaren Ventile, wobei der vorgegebene Zeitraum so bemessen ist, daß sich innerhalb dieses Zeitraumes die Luftfedern so weit entleeren, daß das Kraftfahrzeug den niedrigst möglichen Niveauzustand einnimmt. Auch bei dieser Weiterbildung ist der niedrigst mögliche Niveauzustand dadurch gekennzeichnet, daß die Luftfedern so weit abgeregelt werden, daß der Fahrzeugaufbau des Kraftfahrzeuges auf die Puffer der Stoßdämpfer aufsetzt und der Schwerpunkt des Fahrzeugaufbaus somit den niedrigst möglichen Zustand einnimmt. Aufgrund dessen befindet sich das Kraftfahrzeug in einem fahrdynamisch sicheren Zustand. Der Vorteil der Weiterbildung gemäß Anspruch 3 wird verständlich, wenn man sich folgendes verdeutlicht: Die schaltbaren Ventile des Niveauregelsystems werden von der zweiten Steuereinheit durch einen Steuerstrom in den geöffneten Zustand überführt. Der Steuerstrom muß so lange aufrechterhalten werden, wie die schaltbaren Ventile geöffnet bleiben sollen. Durch Wegnahme des Steuerstromesgehen die schaltbaren Ventile in ihren geschlossenen Grundzustand über. Aufgrund des Steuerstromes entwickelt sich sowohl in der zweiten Steuereinheit als auch in den schaltbaren Ventilen Wärme aufgrund Ohmscher Verluste, die insbesondere die Ventile schädigen kann. Wird also die Ventilöffnungszeit auf einen Zeitraum begrenzt, der so bemessen ist, daß sich innerhalb dieses Zeitraums die Luftfedern so weit entleeren, daß das Kraftfahrzeug den niedrigst möglichen Niveauzustand einnimmt, fließt nur während dieses Zeitraums ein Strom durch die Ventile. Somit ist dort die Wärmeentwicklung zu vernachläßigen und eine Schädigung dieser ausgeschlossen. Es hat sich gezeigt, daß bereits ein Zeitraum von 30 Sekunden bis 60 Sekunden ausreichend ist, um die Luftfedern genügend zu entleeren.

Ein zweites Ausführungsbeispiel der Erfindung nach Anspruch 4 ist dadurch gekennzeichnet, daß
- das Niveauregelsystem mindestens einen Höhensensor aufweist, der ein vom Niveau des Kraftfahrzeuges abhängiges Signal erzeugt, und daß
- die zweite Steuereinheit das Signal des Höhensensors zumindest in den Zeiträumen auswertet, in denen sie die Steuerung der Ventile übernimmt und daß
- die zweite Steuereinheit dann, wenn sie ein von der ersten Steuereinheit erwartetes Signal nicht empfängt und wenn die Auswertung des Signals des Höhensensors ergibt, daß das Niveau des Kraftfahrzeuges oberhalb eines vorgegebenen Niveaus liegt, die schaltbaren Ventile zumindest so lange öffnet und dadurch alle Luftfedern des Niveauregelsystem mit der Atmosphäre verbindet, bis die Auswertung des Signals des Höhensensors ergibt, daß sich das Fahrzeug in einem vorgegebenen fahrdynamisch sicheren Niveaubereich befindet.

Der Vorteil des zweiten Ausführungsbeispiels der Erfindung ist darin zu sehen, daß die schaltbaren Ventile des Niveauregelsystems von der zweiten Steuereinheit nur dann angesteuert werden, wenn die Auswertung des Höhensensorsignals ergibt, daß sich das Kraftfahrzeug nicht in einem fahrdynamisch sicheren Niveaubereich befindet. Auch bei dem zweiten Ausführungsbeispiel der Erfindung kann der fahrdynamisch sichere Zustand des Kraftfahrzeuges dadurch gekennzeichnet sein, daß der Fahrzeugaufbau des Kraftfahrzeuges den niedrigst möglichen Zustand einnimmt. Alternativ kann als fahrdynamisch sicherer Niveaubereich bei diesem Ausführungsbeispiel ein Höhenbereich des Fahrzeugaufbaus gegenüber einem festen Bezugspunkt vorgegeben werden. Befindet sich der Fahrzeugaufbau oberhalb dieses Höhenbereiches, so werden durch die zweite Steuereinheit die Ventile des Niveauregelsystems so lange geöffnet, bis sich das Kraftfahrzeug in dem vorgegebenen Höhenbereich befindet.

Eine Weiterbildung des zweiten Ausführungsbeispiels nach Anspruch 5 ist dadurch gekennzeichnet, daß
- die zweite Steuerheit das Signal des Höhensensors ständig auswertet und daß
- die zweite Steuereinheit unabhängig davon, ob ein von der ersten Steuereinheit erwartetes Signal ausbleibt, dann, wenn die Auswertung des Signals des Höhensensors ergibt, daß das Niveau des Kraftfahrzeuges oberhalb eines vorgegebenen Niveaus liegt, die schaltbaren Ventile zumindest so lange öffnet und dadurch alle Luftfedern des Niveauregelsystems mit der Atmosphäre verbindet, bis die Auswertung des Signals des Höhensensors ergibt, daß sich das Fahrzeug in einem vorgegebenen fahrdynamisch sicheren Niveaubereich befindet.

Auch bei diesem Ausführungsbeispiel kann der fahrdynamisch sichere Niveaubereich so gewählt werden, wie es bereits im Zusammenhang mit Anspruch 4 erläutert worden ist.
Der Vorteil dieser Weiterbildung ist darin zu sehen, daß das Kraftfahrzeug von der zweiten Steuereinheit auch dann in einen fahrdynamisch sicheren Zustand überführt wird, wenn von der ersten Steuereinheit zwar jedes erwartete Signal an die zweite Steuereinheit übermittelt wird, die erste Steuereinheit jedoch - z.B. aufgrund eines fehlerhaften Programmablaufes - fehlerhaft arbeitet und zuläßt, daß das Kraftfahrzeug sich in einem fahrdynamisch unsicheren Zustand befindet (also beispielsweise zuläßt, daß die Luftfedern mit Druckluft aufgefüllt werden, obwohl das Kraftfahrzeug nicht beladen ist, und der Fahrzeugaufbau des Kraftfahrzeuges somit sehr stark angehoben wird).

Eine Weiterbildung der Erfindung nach Anspruch 6 ist dadurch gekennzeichnet, daß
- die zweite Steuereinheit in zeitlichen Abständen ein Signal an die erste Steuereinheit übermittelt und daß
- die erste Steuereinheit eine Prüfvorrichtung enthält, in der überprüft wird, ob die erste Steuereinheit jedes von der zweiten Steuereinheit erwartete Signal empfängt und daß dann, wenn die erste Steuereinheit ein von der zweiten Steuereinheit erwartetes Signal nicht empfängt, die erste Steuereinheit eine Warneinrichtung betätigt.

Die Warneinrichtung kann beispielsweise aus einer Signallampe bestehen, die dem Fahrer des Kraftfahrzeuges anzeigt, daß im Niveauregelsystem ein Fehler vorliegt. Alternativ kann die Warneinrichtung als ein beschreibbarer Speicher in der ersten Steuereinheit ausgebildet sein, in den eingetragen wird, daß die zweite Steuereinheit sich bei der ersten Steuereinheit nicht wie erwartet"gemeldet" hat. Bei der nächsten Inspektion des Kraftfahrzeuges kann dieser Fehlerspeicher in der ersten Steuereinheit ausgelesen und der Fehler ggf. behoben werden. Der Vorteil dieser Weiterbildung ist darin zu sehen, daß auf einfache Art und Weise die Funktion der zweiten Steuereinheit überprüfbar ist und daß frühzeitig Maßnahmen zur vollkommenen Wiederherstellung des Niveauregelsystems eingeleitet werden können.

Gemäß einer Weiterbildung der Erfindung nach Anspruch 7 enthält die Prüfvorrichtung in der zweiten Steuereinheit einen fortlaufend zählenden Zähler, der durch jedes von der ersten Steuereinheit übermittelte Signal zurückgesetzt wird, wobei die zweite Steuereinheit die Steuerung der schaltbaren Ventile übernimmt, wenn der Zählerstand des Zählers einen vorbestimmten Wert erreicht. Auch die ggf. in der ersten Steuereinheit vorhandene Prüfvorrichtung kann genauso ausgebildet sein. Der vorbestimmte Zählerstand des Zählers kann beispielsweise bei 100 liegen und der Zählerstand des Zählers kann durch einen in der zweiten Steuereinheit generierten Impuls beispielsweise jede Millisekunde um 1 erhöht werden. Wird der Zähler durch ein Signal der ersten Steuereinheit einmal zurückgesetzt, würde es also 100 Millisekunden dauern, bis der Zahler den vorbestimmten Wert von 100 erreicht. Die erste Steuereinheit muß nach dem letzten Signal, das den Zähler zurücksetzt, also spätestens nach 99 Millisekunden ein weiteres Signal an die zweite Steuereinheit übermitteln, damit der Zähler in der zweiten Steuereinheit zurückgesetzt wird, bevor der vorgegebene Wert von 100 erreicht wird und die Steuerung der Ventile von der zweiten Steuereinheit übernommen wird. Durch den Zähler wird also ein Zeitintervall definiert (im Beispiel mit der Länge von 100 ms) und die zweite Steuereinheit überprüft, ob in jedem Zeitintervall von der ersten Steuereinehit ein Signal an die zweite Steuereinheit übermittelt wird, das den Zähler zurücksetzt. Der Vorteil der Weiterbildung gemäß Anspruch 7 ist darin zu sehen, daß die Prüfvorrichtung in der zweiten Steuereinheit einfach ausgebildet ist.

Ein Ausführungsbeispiel und weitere Vorteile der Erfindung werden im Zusammenhang mit den nachstehenden Figuren erläutert, darin zeigt:
Fig. 1 ein Niveauregelsystem in schematischer Darstellung,
Fig. 2 ein Block-Diagramm,
Fig. 3 ein Block-Diagramm,
Fig. 4 einen Ausschnitt aus den Figuren 2 und 3.

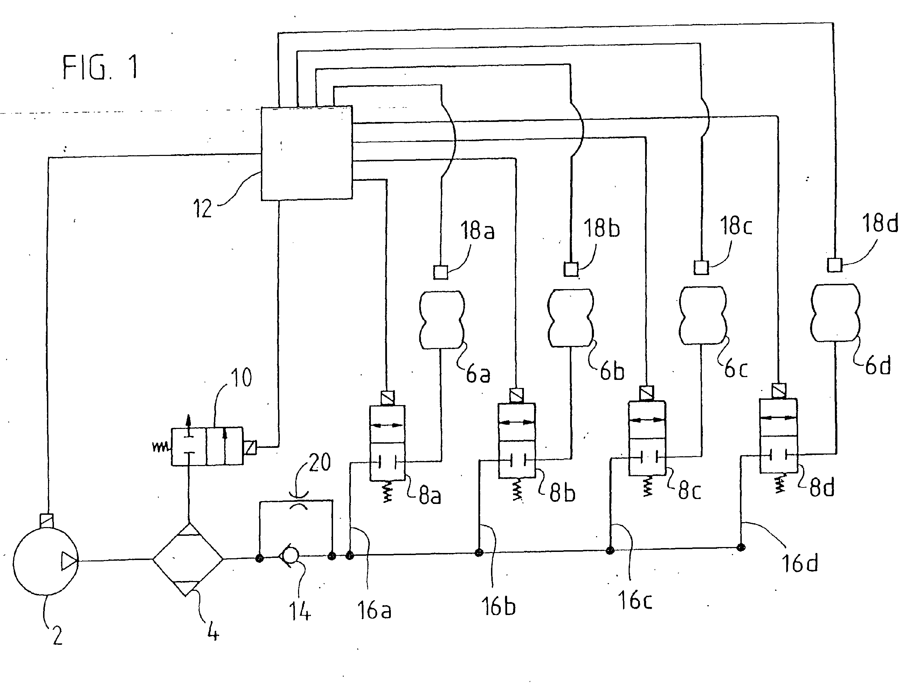

Figur 1 zeigt in schematischer Darstellung ein Niveauregelsystem für ein Kraftfahrzeug, das u.a. eine Druckmittelquelle 2, einen Lufttrockner 4 und Luftfedern 6a - 6d enthält. Jeder der Luftfedern 6a - 6d ist ein steuerbares Ventil 8a - 8d zum Auffüllen oder Abregeln der entsprechenden Luftfeder 6a - 6d zugeordnet. Ferner enthält das Niveauregelsystem ein weiteres steuerbares Ventil 10, über das jede Luftfeder 6a - 6d zum Abregeln mit der Atmosphäre verbindbar ist. In dem gezeigten Ausführungsbeispiel sind die steuerbaren Ventile 8a - 8d und 10 als elektrisch steuerbare Ventile ausgebildet. Die steuerbaren Ventile 8a - 8d und 10 werden von der zentralen Steuereinheit 12 des Niveauregelsystems gesteuert.

Figur 1 zeigt das Niveauregelsystem im Grundzustand, in dem sich die steuerbaren Ventile 8a - 8d und 10 in einem Schaltzustand befinden, der weder ein Auffüllen noch ein Abregeln der Luftfedern 6a - 6d erlaubt. Zum Auffüllen der Luftfedern 6a - 6d werden von der zentralen Steuereinheit 12 die Ventile 8a - 8d angesteuert und von dem in der Figur 1 gezeigten Grundzustand in den zweiten Schaltzustand überführt. Es kann dann Luft von der Druckmittelquelle 2 über den Lufttrockner 4, das zu den Luftfedern 6a - 6d hin öffnende Rückschlagventil 14 und durch die Druckluftleitungen 16a - 16d in die entsprechenden Luftfedern 6a - 6d gefördert werden. Wird mit Hilfe der Höhensensoren 18a - 18d, von denen jeweils einer einer Luftfeder 6a - 6d zugeordnet ist, festgestellt, daß der Fahrzeugaufbau des Kraftfahrzeuges gegenüber einem Bezugspunkt einen bestimmten Abstand einnimmt, so wird der Auffüllvorgang beendet. Dies geschieht dadurch, daß die elektrisch steuerbaren Ventile 8a - 8d von der zentralen Steuereinheit 12 stromlos geschaltet werden und infolgedessen wieder in den in der Figur 1 gezeigten Grundzustand übergehen.

Zum Ab regeln der Luftfedern 6a - 6d werden von der zentralen Steuereinheit 12 wiederum die elektrisch steuerbaren Ventile 8a - 8d und 10 angesteuert, so daß diese von dem in der Figur 1 gezeigten Grundzustand in ihren zweiten Schaltzustand übergehen. Jede Luftfeder 6a - 6d ist dann über die Druckluftleitungen 16a - 16d, die Drossel 20, den Lufttrockner 4 und das Ventil 10 mit der Atmosphäre verbunden. Der Abregelvorgang wird beendet, wenn mit Hilfe der Höhensensoren 18a - 18d, deren Signale in der zentralen Steuereinheit 12 ausgewertet werden, festgestellt wird, daß der Aufbau des Kraftfahrzeuges gegenüber einem bestimmten Bezugspunkt eine vorgegebene Höhe einnimmt. Dies erfolgt dadurch, daß die elektrisch steuerbaren Ventile 8a - 8d und 10 von der zentralen Steuereinheit 12 stromlos geschaltet werden, so daß diese infolgedessen von ihrem zweiten Schaltzustand wieder in den in der Figur 1 gezeigten Grundzustand übergehen.

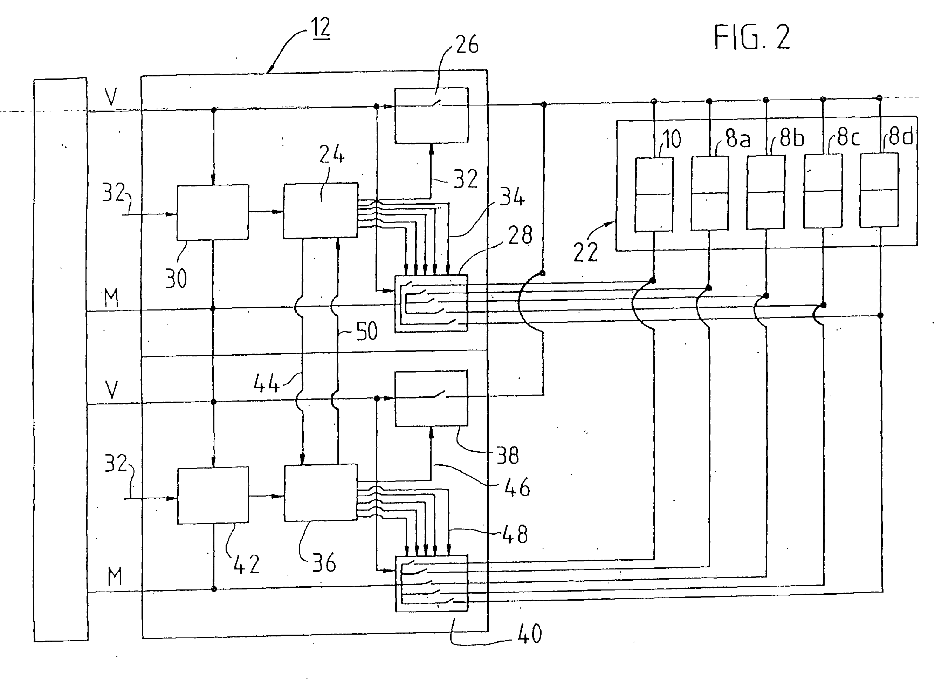

Figur 2 zeigt ein Block-Diagramm, in dem die zentrale Steuereinheit 12 und ein Ventilblock 22 mit den Ventilen 8a - 8d und 10 gezeigt ist. Die zentrale Steuereinheit 12 weist eine erste Steuereinheit 24 in Form eines Mikroprozessors, eine erste Schalteinheit 26 und eine zweite Schalteinheit 28 auf. Die erste Steuereinheit 24 steht über einen Spannungswandler 30 mit der Energieversorgung V des Kraftfahrzeuges in Verbindung. Wird der Spannungswandler 30 zusätzlich mit der Masse M verbunden (z.B. mittels des Zündsignals 32, das einen Schalter schließt), und wandelt er die von der Energiequelle V gelieferte Spannung in die von der ersten Steuereinheit 24 benötigte Spannung um. Wird die erste Steuereinheit 24 über den Spannungswandler 30 mit Energie versorgt, so kann sie die in der Figur 1 gezeigten und im Ventilblock 22 zusammengefaßten elektrisch steuerbaren Ventile 8a - 8d und 10 steuern, so wie es im Zusammenhang mit der Figur 1 erläutert worden ist. Sollen beispielsweise die Luftfedern 6a - 6d (siehe Figur 1) aufgefüllt werden, so müssen die Ventile 8a - 8d angesteuert werden und von ihrem Grundzustand in ihren anderen Schaltzustand überführt werden. Dazu wird von der ersten Steuereinheit 24 über die Signalleitung 32 ein Signal an die erste Schaltereinheit 26 angelegt, so daß sich infolgedessen der Schalter in der Schaltereinheit 26 schließt und sämtliche Ventile 8a - 8d und 10 mit der Energiequelle V des Kraftfahrzeuges verbunden werden. Ferner werden über die zweite Schaltereinheit 28 die Ventile 8a - 8d mit der Masse M verbunden. Dies geschieht dadurch, daß von der ersten Steuereinheit 24 jeweils ein Signal auf die entsprechenden Signalleitungen 34 gegeben wird, so daß sich infolge dieser Signale auf den Signalleitungen 34 die den Ventilen 8a - 8d zugeordneten Schalter in der zweiten Schaltereinheit 28 schließen (beim Auffüllen der Luftfedern 6a - 6d wird also auf die Signalleitung 34, die dem Ventil 10 zugeordnet ist, von der ersten Steuereinheit 24 kein Signal gegeben, so daß sich der entsprechende Schalter in der zweiten Schaltereinheit 28 nicht schließt und somit das Ventil 10 nicht auf Masse gelegt wird und infolgedessen in seinem Grundzustand verbleibt). Sind die Ventile 8a - 8d durch die Signale auf den entsprechenden Signalleitungen 34 auf Masse gelegt, so gehen diese von dem in der Figur 1 gezeigten Grundzustand in den ersten Schaltzustand über. Die Luftfedern können dann mit Druckluft befüllt werden (siehe Figur 1).

Zum Abregeln der Luftfedern gibt die erste Steuereinheit 24 an sich die gleichen Signale auf die Signalleitungen 32 und 34 wie es im Zusammenhang mit dem Auffüllen der Luftfedern erläutert worden ist. Zusätzlich wird jetzt jedoch von der ersten Steuereinheit 24 auch auf die Signalleitung 34 ein Signal gegeben, die dem Ventil 10 zugeordnet ist. Infolgedessen schließt sich in der zweiten Schaltereinheit 28 auch der diesem Ventil 10 zugeordnete Schalter, so daß es auch mit der Masse verbunden ist und von seinem in der Figur 1 gezeigten Grundzustand in den ersten Schaltzustand übergeht. Die Luft kann dann aus den Luftfedern 6a - 6d in die Atmosphäre entweichen, so wie es bereits im Zusammenhang mit der Figur 1 erläutert worden ist.

Über die oben genannten Bestandteile hinaus verfügt die zentrale Steuereinheit 12 über eine zweite Steuereinheit 36, der eine separate erste Schaltereinheit 38 und eine separate zweite Schaltereinheit 40 zugeordnet ist und die ebenfalls als Mikroprozessor oder festverdrahtete Einheit ausgebildet sein kann. Die zweite Steuereinheit 36 steht über einen zweiten Spannungswandler 42 mit der Energiequelle V des Kraftfahrzeuges in Verbindung. Wenn der zweite Spannungswandler 42 mit der Masse M verbunden wird, wird die zweite Steuereinheit 36 von der Energiequelle V des Kraftfahrzeuges mit Energie versorgt.

Die erste Steuereinheit 24 schickt in zeitlichen Abständen über eine Signalleitung 44 ein Signal an die zweite Steuereinheit 36. Diese enthält eine Prüfvorrichtung, in der überprüft wird, ob die zweite Steuereinheit 36 jedes von der ersten Steuereinheit 24 erwartete Signal empfängt. Bleibt in der zweiten Steuereinheit 36 ein von der ersten Steuereinheit 24 erwartetes Signal aus, übernimmt die zweite Steuereinheit die Steuerung der steuerbaren Ventile 8a - 8d und 10 derart, daß durch eine Ansteuerung der steuerbaren Ventile 8a - 8d und 10 durch die zweite Steuereinheit 36 das Kraftfahrzeug in einen fahrdynamisch sicheren Zustand überführt wird.

Bei dem in der Figur 2 gezeigten Ausführungsbeispiel der Erfindung geschieht dies dadurch, daß die zweite Steuereinheit 36 ein Signal an der Signalleitung 46 und an allen Signalleitungen 48 anlegt. Daraufhin wird der Schalter in der ersten Schaltereinheit 38 und sämtliche Schalter in der zweiten Schaltereinheit 40 geschlossen, so daß der Steuereingang sämtlicher steuerbarer Ventile 8a - 8d und 10 sowohl mit der Energiequelle V als auch mit der Masse M verbunden ist. Die steuerbaren Ventile 8a - 8d und 10 gehen dann von dem in der Figur 1 gezeigten Grundzustand in den zweiten Schaltzustand über, so daß sämtliche Luftfedern 6a - 6d mit der Atmosphäre verbunden sind, so wie es bereits im Zusammenhang mit der Figur 1 erläutert worden ist. Im einfachsten Fall liegt das Signal an den Signalleitungen 46 und 48 auf unbestimmte Zeit an. Die Luftfedern 6a - 6d werden dann vollständig entleert, so daß der Aufbau des Kraftfahrzeuges auf die vorgesehenen Puffer aufsetzt und einen niedrigen Schwerpunkt einnimmt.

Das Kraftfahrzeug befindet sich dann in einem fahrdynamisch sicheren Zustand.

Vorzugsweise werden von der zweiten Steuereinheit 36 die Signale an den Signalleitungen 46 und 48 jedoch nur über einen vorgegebenen Zeitraum aufrechterhalten, der in der zweiten Steuereinheit 36 beispielsweise mit Hilfe eines Zählers überprüft wird. Nach Ablauf des vorgegebenen Zeitaumes werden von der zweiten Steuereinheit 36 keine Signale mehr auf die Signalleitungen 46 und 48 gegeben, so daß die steuerbaren Ventile 8a - 8d und 10 von ihrem ersten Schaltzustand wieder in den in der Figur 1 gezeigten Grundzustand übergehen. Der vorgegebene Zeitraum wird so bemessen, daß sich innerhalb dieses Zeitraumes die Luftfedern 6a - 6d soweit entleeren, daß der Aufbau des Kraftfahrzeuges auf den Puffern des Kraftfahrzeuges aufsetzt und der Schwerpunkt des Kraftfahrzeuges somit seinen niedrigst möglichen Niveauzustand einnimmt. Es hat sich gezeigt, daß ca. 30 Sekunden bis 60 Sekunden ausreichend sind, um diesen Zustand zu erreichen, so daß die Signale lediglich über diesen Zeitraum an den Signalleitungen 46 und 48 anliegen müssen.

Gemäß einer Weiterbildung der Erfindung übermittelt die zweite Steuereinheit 36 über eine Signalleitung 50 in regelmäßigen zeitlichen Abständen ein Signal an die erste Steuereinheit 24. In einer Prüfvorrichtung der ersten Steuereinheit wird überprüft, ob die erste Steuereinheit 24 jedes von der zweiten Steuereinheit 36 erwartete Signal empfängt. Bleibt in der ersten Steuereinheit 24 ein erwartetes Signal aus, so wird von der ersten Steuereinheit 24 eine Warneinrichtung, beispielsweise in Form einer Warnlampe, betätigt.

Der Figur 2 ist zu entnehmen, daß die zweite Steuereinheit 36 über einen separaten Versorgungspfad mit der Energiequelle V bzw. mit der Masse M verbunden wird, und daß der zweiten Steuereinheit 36 eine separate erste Schaltereinheit 38 und eine separate zweite Schaltereinheit 40 zugeordnet ist. Durch diese Redundanzen wird die Sicherheit in dem Niveauregelsystem offensichtlich erhöht. Es ist jedoch beispielsweise auch möglich, daß der zweiten Steuereinheit 36 keine separate erste Schaltereinheit 38 und keine separate zweite Schaltereinheit 40 zugeordnet ist und die zweite Steuereinheit 36 vielmehr auch die Schalter in der ersten Schaltereinheit 26 bzw. in der zweiten Schaltereinheit 28 ansteuert.

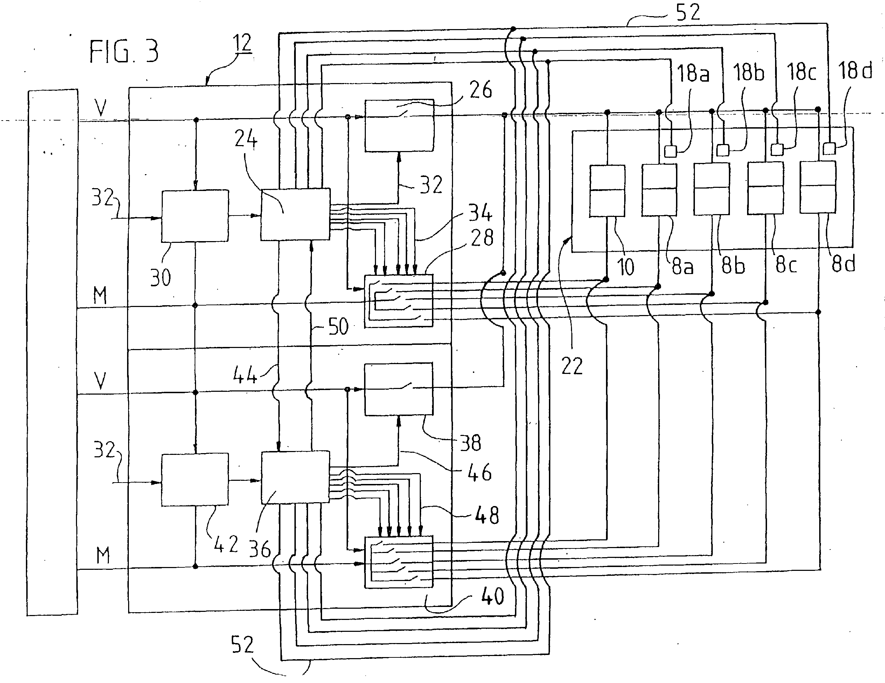

Figur 3 zeigt ein Ausführungsbeispiel der Erfindung, in dem jeder Luftfeder 6a - 6d ein Höhensensor 18a - 18d (s. auch Figur 1) zugeordnet ist. Die Signale der Höhensensoren 18a - 18d werden über Signalleitungen 52 sowohl zu der ersten Steuereinheit 24 als auch zu der zweiten Steuereinheit 36 übermittelt. Im übrigen weist das Ausführungsbeispiel der Erfindung gemäß Figur 3 den gleichen Aufbau und die gleiche Funktionalität wie das in der Figur 2 gezeigte Ausführungsbeispiel der Erfindung auf, so daß diesbezüglich auf die Figurenbeschreibung der Figur 2 verwiesen wird. Erhält die zweite Steuereinheit 36 ein von der ersten Steuereinheit 24 erwartetes Signal nicht, so übernimmt sie die Steuerung der steuerbaren Ventile 8a - 8d und 10. Die zweite Steuereinheit 36 wertet die Signale der Höhensensoren zumindest in den Zeiträumen aus, in denen sie die Steuerung der schaltbaren Ventile 8a - 8d und 10 übernimmt. Wird in einem solchen Zeitraum von der zweiten Steuereinheit 36 anhand der Signale der Höhensensoren 18a - 18d festgestellt, daß das Niveau des Kraftfahrzeuges oberhalb eines vorgegebenen Niveaus liegt, so werden die schaltbaren Ventile 8a - 8d und 10 zumindest so lange geöffnet und dadurch alle Luftfedern 6a - 6d mit der Atmosphäre vebunden, bis die Auswertung der Signale der Höhensensoren 18a- 18d ergibt, daß sich das Kraftfahrzeug in einem vorgegebenen fahrdynamisch sicheren Niveaubereich befindet. Die Öffnung der schaltbaren Ventile 8a - 8d und 10 geschieht genauso, wie es bereits im Zusammenhang mit der Figur 2 erläutert worden ist. Befindet sich das Kraftfahrzeug in dem vorgegebenen Niveaubereich, so werden die schaltbaren Ventile 8a - 8d und 10 von der zweiten Steuereinheit 36 wieder in den Grundzustand überführt. Auch dies geschieht genauso, wie es bereits im Zusammenhang mit der Figur 2 erläutert worden ist.

Vorzugsweise werden die Signale der Höhensensoren 18a - 18d von der zweiten Steuereinheit nicht nur in den oben angesprochenen Zeiträumen, sondern ständig ausgewertet. Ergibt die Auswertung der Signale, daß das Niveau des Kraftfahrzeuges oberhalb eines vorgegebenen Niveaus liegt, so werden die schaltbaren Ventile 8a - 8d und 10 durch die zweite Steuereinheit auch dann geöffnet, wenn die zweite Steuereinheit 36 von der ersten Steuereinheit 24 alle erwarteten Signale erhält. Die schaltbaren Ventile 8a - 8d und 10 bleiben so lange geöffnet, bis die Auswertung der Signale der Höhensensoren 18a - 18d in der zweiten Steuereinheit 36 ergibt, daß sich das Fahrzeug in einem vorgegebenen fahrdynamisch sicheren Niveaubereich befindet. Dann werden die steuerbaren Ventile 8a - 8d und 10 von der zweiten Steuereinheit 36 wieder in den Grundzustand überführt. Die Schaltung der Ventile 8a - 8d und 10 durch die zweite Steuereinheit 36 geschieht hier genauso, wie es bereits im Zusammenhang mit der Figur 2 erläutert worden ist.

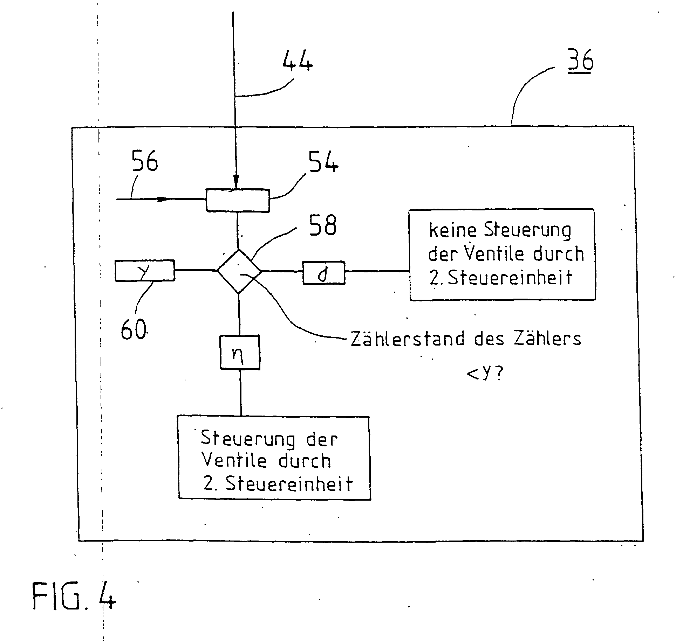

Figur 4 zeigt beispielhaft den Aufbau einer in der zweiten Steuereinheit 36 befindlichen Prüfvorrichtung, die u.a. einen Zähler 54 enthält. Auf den Eingang des Zählers wird in regelmäßigen zeitlichen Abständen über die Signalleitung 56 ein Impuls geleitet, der den Zählerstand des Zählers 54 jeweils um eins erhöht. Bei dem Impuls kann es sich beispielsweise um das Taktsignal der zweiten Steuereinheit 36 handeln, wenn diese als Mikroprozessor ausgebildet ist. Der aktuelle Zählerstand des Zählers 54 wird in einem Komparator 58 mit einem vorgegebenen Zählerstand Y verglichen, der in einem Speicher 60 gespeichert ist. In dem Komparator 58 wird geprüft, ob der Zählerstand des Zählers 54 kleiner dem vorgegebenen Wert Y ist. Ist dies der Fall, so wird die Steuerung der Ventile 8a - 8d und 10 nicht durch die zweite Steuereinheit 36 übernommen, sondern die Ventile werden weiterhin durch die erste Steuereinheit 24 gesteuert. Erreicht der Zählerstand des Zählers 54 hingegen den Wert Y, so wird die Steuerung der Ventile 8a - 8d und 10 durch die zweite Steuereinheit 36 übernommen, so wie es im Zusammenhang mit den Figuren 2 und 3 erläutert worden ist.

Von der ersten Steuereinheit 24 wird in zeitlichen Abständen über eine Signalleitung 44 ein Reset-Signal auf den Zähler 54 geleitet, durch das der Zählerstand des Zählers 54 auf Null zurückgesetzt wird. Benötigt der Zähler 54 also eine gewisse Zeit, um von Null bis zu dem Wert Y, der in dem Speicher 60 gespeichert ist, zu zählen, so muß der Zähler 54 in jedem Zeitintervall von Null bis Y durch ein Reset-Signal zurückgesetzt werden. Wird in einem Zeitintervall kein Reset-Signal auf den Zähler 54 geführt, so erreicht der Zählerstand den vorgegebenen Wert Y und der Komparator 58 liefert das Ergebnis "nein" und die Steuerung der Ventile 8a - 8d und 10 wird von der zweiten Steuereinheit 36 übernommen.

Beispiel: In dem Speicher 60 ist der Wert Y = 100 gespeichert und der Zähler 54 hat den Ausgangswert Null. Wird über die Signalleitung 56 jede Millisekunde ein Impuls auf den Zähler 54 gegeben, so hat dieser innerhalb von 100 Millisekunden den Zählerstand 100 erreicht, wenn innerhalb der 100 Millisekunden kein Reset-Signal über die Signalleitung 44 an den Zähler 54 angelegt wird, der diesen auf Null zurücksetzt. In diesem Fall wird die Steuerung der Ventile 8a - 8d und 10 durch die zweite Steuereinheit 36 übernommen. Wird hingegen innerhalb der 100 Millisekunden zu einem beliebigen Zeitpunkt ein Reset-Signal über die Signalleitung 44 an den Zähler 54 angelegt, so wird dieser auf Null zurückgesetzt und die Prozedur beginnt von neuem. Die Steuerung der Ventile 8a - 8d und 10 wird dann nicht durch die zweite Steuereinheit 36 übernommen, sondern weiter von der ersten Steuereinheit 24 vorgenommen, und zwar solange, bis innerhalb eines Zeitintervalls von 100 ms ein Reset-Signal von der ersten Steuereinheit 24 ausbleibt.

### Bezugszeichenliste

- 2: Druckmittelquelle
- 4: Lufttrockner
- 6a - 6d: Luftfedern
- 8a - 8a: steuerbare Ventile
- 10: steuerbares Ventil
- 12: zentrale Steuereinheit
- 14: Rückschlagventil
- 16a -16d: Druckluftleitungen
- 18a - 18d: Höhensensoren
- 20: Drossel
- 22: Ventilblock
- 24: erste Steuereinheit
- 26: erste Schaltereinheit
- 28: zweite Schaltereinheit
- 30: Spannungswandler
- 32, 34: Signalleitung
- 36: zweite Steuereinheit
- 38: erste Schaltereinheit
- 40: zweite Schaltereinheit
- 42: zweiter Spannungswandler
- 44, 46, 48, 50, 52: Signalleitung
- 54: Zähler
- 56: Signalleitung
- 58: Komparator
- 60: Speicher

## Patentansprüche

1. Niveauregelsystem für ein Kraftfahrzeug, das folgende Bestandteile enthält:
- Luftfedern (6a - 6d), wobei jeder Luftfeder (6a - 6d) jeweils ein steuerbares Ventil (8a - 8d) zum Auffüllen oder Abregeln der entsprechenden Luftfeder (6a - 6d) zugeordnet ist,
- ein weiteres steuerbares Ventil, über das jede Luftfeder (6a - 6d) zum Abregeln mit der Atmosphäre verbindbar ist,
- eine erste Steuereinheit (24), die die steuerbaren Ventile (8a - 8d, 10) zum Auffüllen oder Abregeln der Luftfedern (6a - 6d) steuert,
**dadurch gekennzeichnet, daß**
- das Niveauregelsystem eine zweite Steuereinheit (36) enthält und daß
- die erste Steuereinheit (24) in zeitlichen Abständen ein Signal an die zweite Steuereinheit (36) übermittelt und daß
- die zweite Steuereinheit (36) eine Prüfvorrichtung (54, 58) enthält, in der überprüft wird, ob die zweite Steuereinheit (36) jedes von der ersten Steuereinheit (24) erwartete Signal empfängt und das dann, wenn die zweite Steuereinheit (36) ein von der ersten Steuereinheit (24) erwartetes Signal nicht empfängt, die zweite Steuereinheit (36) die Steuerung der steuerbaren Ventile (8a - 8d, 10) derart übernimmt, daß durch eine Ansteuerung der steuerbaren Ventile (8a - 8d, 10) durch die zweite Steuereinheit (36) das Kraftfahrzeug in einen fahrdynamisch sicheren Zustand überführt wird.

2. Niveauregelsystem nach Anspruch 1, **dadurch gekennzeichnet, daß** die zweite Steuereinheit (36) dann, wenn sie ein von der ersten Steuereinheit (24) erwartetes Signal nicht empfängt, die steuerbaren Ventile (8a - 8d, 10) öffnet, so daß jede Luftfeder des Niveauregelsystems mit der Atmosphäre verbunden ist. die steuerbaren Ventile (8a - 8d, 10) zumindest so lange öffnet und dadurch alle Luftfedern (6a - 6d) des Niveauregelsystems mit der Atmosphäre verbindet, bis die Auswertung des Signals des Höhensensors (18a - 18d) ergibt, daß sich das Fahrzeug in einem vorgegebenen fahrdynamisch sicheren Niveaubereich befindet.

3. Niveauregelsystem nach Anspruch 2, **dadurch gekennzeichnet, daß** die zweite Steuereinheit (36) durch Öffnung der steuerbaren Ventile (8a - 8d, 10) den Zustand, in dem jede Luftfeder (6a - 6d) des Niveauregelsystems mit der Atmosphäre verbunden ist, über einen vorgegebenen Zeitraum aufrechterhält, und nach Ablauf des vorgegebenen Zeitraums die schaltbaren Ventile (6a - 6d, 10) schließt, wobei der vorgegebene Zeitraum so bemessen ist, daß sich innerhalb dieses Zeitraums die Luftfedern (6a - 6d) so weit entleeren, daß das Kraftfahrzeug den niedrigst möglichen Niveauzustand einnimmt.

4. Niveauregelsystem nach Anspruch 1, **dadurch gekennzeichnet, daß**
- das Niveauregelsystem mindestens einen Höhensensor (18a - 18d) aufweist, der ein vom Niveau des Kraftfahrzeuges abhängiges Signal erzeugt, und daß
- die zweite Steuereinheit (36) das Signal des Höhensensors (18a - 18d) zumindest in den Zeiträumen auswertet, in denen sie die Steuerung der Ventile übernimmt, und daß
- die zweite Steuereinheit (36) dann, wenn sie ein von der ersten Steuereinheit (24) erwartetes Signal nicht empfängt und wenn die Auswertung des Signals des Höhensensors ergibt, daß das Niveau des Kraftfahrzeuges oberhalb eines vorgegebenen Niveaus liegt, die steuerbaren Ventile (8a - 8d, 10) zumindest so lange öffnet und dadurch alle Luftfedern (6a - 6d) des Niveauregelsystems mit der Atmosphäre verbindet, bis die Auswertung des Signals des Höhensensors (18a - 18d) ergibt, daß sich das Fahrzeug in einem vorgegebenen fahrdynamisch sicheren Niveaubereich befindet.

5. Niveauregelsystem nach Anspruch 4, **dadurch gekennzeichnet, daß**
- die zweite Steuereinheit (36) das Signal des Höhensensors (18a - 18d) ständig auswertet und das
- die zweite Steuereinheit (36) unabhängig davon, ob ein von der ersten Steuereinheit (24) erwartetes Signal ausbleibt, dann, wenn die Auswertung des Signals des Höhensensors (18a - 18d) ergibt, daß das Niveau des Kraftfahrzeuges oberhalb eines vorgegebenen Niveaus liegt,

6. Niveauregelsystem nach einem der Ansprüche 1 bis 5, **dadurch gekennzeichnet, daß**
- die zweite Steuereinheit (36) in zeitlichen Abständen ein Signal an die erste Steuereinheit (24) übermittelt und daß
- die erste Steuereinheit (24) eine Prüfvorrichtung enthält, in der überprüft wird, ob die erste Steuereinheit (24) jedes von der zweiten Steuereinheit (36) erwartete Signal empfängt und daß dann, wenn die erste Steuereinheit (24) ein von der zweiten Steuereinheit (36) erwartetes Signal nicht empfängt, die erste Steuereinheit (24) eine Warneinrichtung betätigt.

7. Niveauregelsystem nach einem der Ansprüche 1 bis 6, **dadurch gekennzeichnet, daß** die Prüfvorrichtung (54, 58) in der zweiten Steuereinheit (36) einen fortlaufend zählenden Zähler (54) enthält, der durch jedes von der ersten Steuereinheit (24) übermittelte Signal zurückgesetzt wird und daß die zweite Steuereinheit (36) die Steuerung der steuerbaren Ventile (8a - 8d, 10) übernimmt, wenn der Zählerstand des Zählers (54) einen vorbestimmten Wert erreicht.

## Claims

1. Ride-height control system for a motor vehicle, which contains the following components:
- air springs (6a - 6d), wherein each air spring (6a - 6d) is assigned a controllable valve (8a - 8d) for filling or deactivating the corresponding air spring (6a - 6d),
- a further controllable valve by means of which each air spring (6a - 6d) can be connected to the atmosphere for the purpose of deactivation,
- a first control unit (24) which controls the controllable valves (8a - 8d, 10), for filling or deactivating the air springs (6a - 6d),
**characterized in that**
- the ride-height control system contains a second control unit (36), and **in that**
- the first control unit (24) transmits a signal to the second control unit (36) at time intervals, and **in that**
- the second control unit (36) contains a checking device (54, 58) in which it is checked whether the second control unit (36) receives every signal which is expected from the first control unit (24), and **in that** if the second control unit (36) does not receive a signal which is expected from the first control unit (24), the second control unit (36) assumes the control of the controllable valves (8a - 8d, 10) in such a way that the motor vehicle is placed in a state which is safe in terms of vehicle dynamics through actuation of the controllable valves (8a - 8d, 10) via the second control unit (36).

2. Ride-height control system according to Claim 1, **characterized in that** if the second control unit (36) does not receive a signal which is expected from the first control unit (24), said second control unit (36) opens the controllable valves (8a - 8d, 10) so that each air spring of the ride-height control system is connected to the atmosphere.

3. Ride-height control system according to Claim 2, **characterized in that**, by opening the controllable valves (8a - 8d, 10), the state in which each air spring (6a - 6d) of the ride-height control system is connected to the atmosphere is maintained by the second control unit (36) over a predefined time period, and after the predefined time period has ended the switchable valves (6a - 6d, 10) are closed by said second control unit (36), wherein the predefined time period is dimensioned in such a way that within this time period the air springs (6a - 6d) empty to such an extent that the motor vehicle assumes the lowest possible ride height state.

4. Ride-height control system according to Claim 1, **characterized in that**
- the Ride-height control system has at least one height sensor (18a - 18d) which generates a signal which is dependent on the ride height of the motor vehicle, and **in that**
- the second control unit (36) evaluates the signal of the height sensor (18a - 18d), at least in the time periods in which it carries out the control of the valves, and **in that**
- when the second control unit (36) does not receive a signal which is expected from the first control unit (24) and when the evaluation of the signal of the height sensor reveals that the ride height of the motor vehicle is above a predefined ride height, said second control unit (36) opens the controllable valves (8a-8d, 10) and as a result connects all the air springs (6a - 6d) of the ride-height control system to the atmosphere, at least until the evaluation of the signal of the height sensor (18a - 18d) reveals that the vehicle is in a predefined ride height range which is safe in terms of vehicle dynamics.

5. Ride-height control system according to Claim 4, **characterized in that**
- the second control unit (36) continuously evaluates the signal of the height sensor (18a - 18d), and **in that**
- irrespective of whether a signal which is expected from the first control unit (24) fails to occur when the evaluation of the signal of the height sensor (18a - 18d) reveals that the ride height of the motor vehicle is above a predefined ride height, the second control unit (36) opens the controllable valves (8a - 8d, 10) and as a result connects all the air springs (6a-6d) of the ride height control system to the atmosphere, at least until the evaluation of the signal of the height sensor (18a - 18d) reveals that the vehicle is in a predefined ride height range which is safe in terms of vehicle dynamics.

6. Ride-height control system according to one of Claims 1 to 5, **characterized in that**
- the second control unit (36) transmits a signal to the first control unit (24) at time intervals, and **in that**
- the first control unit (24) contains a checking device in which it is checked whether the first control unit (24) receives every signal which is expected from the second control unit (36), and **in that** if the first control unit (24) does not receive a signal which is expected from the second control unit (36), the first control unit (24) activates a warning device.

7. Ride-height control system according to one of Claims 1 to 6, **characterized in that** the checking device (54, 58) in the second control unit (36) contains a progressively counting counter (54) which is reset by each signal which is transmitted by the first control unit (24), and **in that** the second control unit (36) carries out the control of the controllable valves (8a - 8d, 10) when the counter reading of the counter (54) reaches a predetermined value.

## Revendications

1. Système de régulation de niveau pour un véhicule automobile qui contient les composants suivants :
- des amortisseurs pneumatiques (6a - 6d), une vanne commandable (8a - 8d) étant associée à chaque amortisseur pneumatique (6a - 6d) pour remplir ou réguler la descente de l'amortisseur pneumatique (6a - 6d) correspondant,
- une vanne commandable supplémentaire par le biais de laquelle chaque amortisseur pneumatique (6a - 6d) peut être mis en contact avec l'atmosphère pour réguler sa descente,
- une première unité de commande (24) qui commande les vannes commandables (8a - 8d, 10) pour le remplissage ou la descente régulée des amortisseurs pneumatiques (6a - 6d),
**caractérisé en ce que**
- le système de régulation de niveau contient une deuxième unité de commande (36) et que
- la première unité de commande (24) communique périodiquement un signal à la deuxième unité de commande (36) et que
- la deuxième unité de commande (36) contient un dispositif de contrôle (54, 58) qui vérifie si la deuxième unité de commande (36) reçoit chacun des signaux attendus de la part de la première unité de commande (24) et que si la deuxième unité de commande (36) ne reçoit pas l'un des signaux attendus de la part de la première unité de commande (24), la deuxième unité de commande (36) prend en charge la commande des vannes commandables (8a - 8d, 10) de telle sorte qu'une commande des vannes commandables (8a - 8d, 10) par la deuxième unité de commande (36) amène le véhicule automobile dans un état sécurisé du point de vue de la dynamique de conduite.

2. Système de régulation de niveau selon la revendication 1, **caractérisé en ce que** la deuxième unité de commande (36), lorsqu'elle ne reçoit pas l'un des signaux attendus de la part de la première unité de commande (24), ouvre les vannes commandables (8a - 8d, 10) de telle sorte que chaque amortisseur pneumatique du système de régulation de niveau soit relié avec l'atmosphère.

3. Système de régulation de niveau selon la revendication 2, **caractérisé en ce que** la deuxième unité de commande (36), en ouvrant les vannes commandables (8a - 8d, 10), maintient l'état dans lequel chaque amortisseur pneumatique (6a - 6d) du système de régulation de niveau est relié avec l'atmosphère pendant une période prédéfinie et ferme les vannes commandables (6a - 6d, 10) après écoulement de la période prédéfinie, la durée de la période prédéfinie étant choisie de telle sorte que les amortisseurs pneumatiques (6a - 6d) se vident pendant cette période au point que le véhicule automobile atteigne le niveau le plus bas possible.

4. Système de régulation de niveau selon la revendication 1, **caractérisé en ce que**
- le système de régulation de niveau présente au moins un détecteur de hauteur (18a - 18d) qui génère un signal dépendant du niveau du véhicule automobile, et que
- la deuxième unité de commande (36) interprète le signal du détecteur de hauteur (18a - 18d) au moins pendant les périodes dans lesquelles elle prend en charge la commande des vannes, et que
- la deuxième unité de commande (36), lorsqu'elle ne reçoit pas l'un des signaux attendus de la part de la première unité de commande (24) et lorsque l'interprétation du signal du détecteur de hauteur indique que le niveau du véhicule automobile se trouve au-dessus d'un niveau prédéfini, ouvre les vannes commandables (8a - 8d, 10) et met ainsi tous les amortisseurs pneumatiques (6a - 6d) du système de régulation de niveau en contact avec l'atmosphère au moins jusqu'à ce que l'interprétation du signal du détecteur de hauteur (18a - 18d) indique que le véhicule automobile se trouve dans un état prédéfini sécurisé du point de vue de la dynamique de conduite.

5. Système de régulation de niveau selon la revendication 4, **caractérisé en ce que**
- la deuxième unité de commande (36) interprète continuellement le signal du détecteur de hauteur (18a - 18d) et que
- la deuxième unité de commande (36), indépendamment de l'absence d'un signal attendu de la part de la première unité de commande (24), lorsque l'interprétation du signal du détecteur de hauteur (18a
- 18d) indique que le niveau du véhicule automobile se trouve au-dessus d'un niveau prédéfini, ouvre les vannes commandables (8a - 8d, 10) et met ainsi tous les amortisseurs pneumatiques (6a - 6d) du système de régulation de niveau en contact avec l'atmosphère au moins jusqu'à ce que l'interprétation du signal du détecteur de hauteur (18a - 18d) indique que le véhicule automobile se trouve dans un état prédéfini sécurisé du point de vue de la dynamique de conduite.

6. Système de régulation de niveau selon l'une des revendications 1 à 5, **caractérisé en ce que**
- la deuxième unité de commande (36) communique périodiquement un signal à la première unité de commande (24) et que
- la première unité de commande (24) contient un dispositif de contrôle qui vérifie si la première unité de commande (24) reçoit chacun des signaux attendus de la part de la deuxième unité de commande (36) et que si la première unité de commande (24) ne reçoit pas l'un des signaux attendus de la part de la deuxième unité de commande (36), la première unité de commande (24) actionne un dispositif d'alerte.

7. Système de régulation de niveau selon l'une des revendications 1 à 6, **caractérisé en ce que** le dispositif de contrôle (54, 58) dans la deuxième unité de commande (36) contient un compteur à comptage continu (54) qui est remis à zéro par chaque signal communiqué par la première unité de commande (24) et que la deuxième unité de commande (36) prend en charge la commande des vannes (8a - 8d, 10) lorsque la valeur du compteur (54) a atteint une valeur prédéterminée.
